# EUROPÄISCHE PATENTSCHRIFT

(11) **EP 1 744 916 B1**
(45) Veröffentlichungstag und Bekanntmachung des Hinweises auf die Patenterteilung: **23.12.2009**
(21) Anmeldenummer: 05717057.3
(22) Anmeldetag: 16.03.2005
(51) Int. Cl.: B60G 17/052

(54) **VERFAHREN ZUR LUFTMENGENREGELUNG IN EINER GESCHLOSSENEN LUFTVERSORGUNGSANLAGE FÜR EIN FAHRWERK**
AIR FLOW REGULATION METHOD FOR USE IN A SELF-CONTAINED AIR SUPPLY SYSTEM FOR A CHASSIS
PROCEDE POUR REGULER LE VOLUME D'AIR DANS UNE INSTALLATION D'ALIMENTATION EN AIR FERMEE POUR UN CHASSIS

(30) Priorität: 03.05.2004 DE 102004021592
(43) Veröffentlichungstag der Anmeldung: 24.01.2007
(73) Patentinhaber: Continental Aktiengesellschaft, 30165 Hannover (DE)
(72) Erfinder: FOLCHERT, Uwe, 31867 Lauenau (DE); ILIAS, Heike, 30900 Wedemark (DE)
(74) Vertreter: Finger, Karsten
(86) Internationale Anmeldenummer: PCT/EP2005/051186
(87) Internationale Veröffentlichungsnummer: WO 2005/108130

(56) Entgegenhaltungen:
- DE-C1- 10 122 567
- US-A- 5 119 895
- US-A1- 2003 107 191
- PATENT ABSTRACTS OF JAPAN Bd. 018, Nr. 453 (M-1662), 24. August 1994 (1994-08-24) & JP 06 143959 A (AISIN SEIKI CO LTD; others: 01), 24. Mai 1994 (1994-05-24)

## Beschreibung

Die Erfindung bezieht sich auf ein Verfahren nach dem Oberbegriff des Anspruchs 1. Derartige Luftversorgungsanlagen werden beispielsweise für die Niveauregelung von Kraftfahrzeugen eingesetzt.

Eine solche Luftversorgungsanlage ist aus der EP 1 243 447 A2 bekannt. Diese Luftversorgungsanlage besteht gemäß ihrer Fig. 1 im Wesentlichen aus einer Luftversorgungseinheit und mehreren Luftfedern zur Abstützung des Fahrzeugaufbaus.

Zur Luftversorgungseinheit gehören in der Hauptsache ein Kompressor und ein Luftspeicher. Dabei ist der Kompressor saugseitig mit der Atmosphäre und druckseitig über einen Lufttrockner und einem ersten 2/2-Wegeventil mit dem Luftspeicher verbunden. Damit versorgt der Kompressor den Luftspeicher mit frischer Luft aus der Atmosphäre. Der Kompressor besitzt saugseitig über ein zweites 2/2-Wegeventil Anschluss an die Luftfedern. Damit füllt der Kompressor über das erste 2/2-Wegeventil Druckluft aus den Luftfedern in den Luftspeicher um. Der Kompressor ist auch saugseitig über ein drittes 2/2-Wegeventil mit dem Luftspeicher und druckseitig über ein viertes 2/2-Wegeventil mit den Luftfedern verbunden. Dadurch wird Druckluft aus dem Luftspeicher in die Luftfeder befördert.

Die Luflfedern sind parallel zueinander angeordnet, wobei jeder Luftfeder ein 2/2-Wegeventil zugeordnet ist und alle 2/2-Wegeventileinheiten über eine Sammelleitung mit der Luftversorgungseinheit verbunden sind. In der gemeinsamen Sammelleitung der Wegeventileinheit befindet sich ein Drucksensor.

Solche geschlossenen Luftversorgungsanlagen arbeiten innerhalb eines vorher festgelegten Leistungsbereiches, deren Grenzen oft dadurch unterschritten werden, dass eine Druckluftmenge durch eine Leckage entweicht oder deren Grenzen oft dadurch überschritten werden, dass sich die Druckluftmenge durch einen Temperaturanstieg erhöht. Das hat innerhalb der Niveauregelung des Fahrzeuges die Auswirkungen, dass sich das Anheben des Fahrzeugaufbaus verlangsamt, wenn die Druckluftmenge zu gering ist, und dass sich das Absenken des Fahrzeugaufbaus verlangsamt, wenn die Druckluftmenge zu hoch ist.

Zur Sicherstellung des Leistungsbereiches in seinen zulässigen Grenzen muss daher immer eine ausreichende Druckluftmenge in der Luftversorgungsanlage vorhanden sein. Dazu wird mit Hilfe des Drucksensors ständig der Druck in den Luftfedern und im Luftspeicher gemessen und daraus der Überschuss oder der Bedarf an zusätzlicher Druckluftmenge errechnet. Bei einem Überschuss wird eine Druckluftmenge aus der Luftversorgungsanlage abgelassen und bei einem Bedarf an einer Druckluftmenge wird der Luftspeicher mit frischer Luft aufgefüllt.

Dieses genannte Verfahren wird den technischen Anforderungen gerecht. Allerdings ist der gerätetechnische Aufwand relativ hoch. So wird der Einsatz eines Drucksensors mit einer entsprechenden Verkabelung erforderlich. Das verursacht zusätzliche Kosten. Weiterhin benötigt der Drucksensor mit seiner Verkabelung einen erheblichen Einbauraum, der in der Fahrzeugtechnik in der Regel nicht vorhanden ist und der daher bei der Realisierung der Luftversorgungsanlage zu Kompromissen führt. Auch das führt zu höheren Kosten.

Aus der DE 101 22 567 C1 ist ein weiteres Verfahren zur Luftmengenregelung bekannt, bei dem der Einfluss der momentanen Belastung bei der Regelung der Luftmenge ausgeschlossen wird und damit eine Luflmengenregelung nur bei einer durch Leckage oder Temperaturschwankung begründeten Abweichung vom ausgelegten Luftmengenband vorgenommen wird.

Dabei werden die momentanen Druckluftmengen im Luftspeicher und in den Luftfedern ermittelt, in dem die Drücke mit Hilfe eines Drucksensors gemessen und mit dem bekannten Volumen des Luftspeichers sowie mit dem über eine Wegmessung ermittelten Volumen der Luftfedern multipliziert werden. Diese so ermittelte Druckluftmenge der Luftversorgungsanlage wird mit der für einen ausgelegten Belastungsfall optimalen Druckluftmenge verglichen. Ist die ermittelte Druckluftmenge kleiner als eine minimal erforderliche Druckluftmenge, dann muss eine bestimmte Druckluftmenge aufgefüllt werden, ist sie größer als eine maximal zulässige Druckluftmenge, dann muss eine bestimmte Druckluftmenge abgelassen werden. Aus einer bekannten Regelgeschwindigkeits-Druckluftrnengen-Kennlinie wird die für das Auffüllen bzw. für das Ablassen erforderliche Zeit ermittelt und die entsprechenden Ventile bzw. der Kompressor in der Luftversorgungsanlage für diese Zeitspanne aktiviert.

Auch dieses Verfahren erfordert das Vorhandensein eines Drucksensors mit allen seinen bereits beschriebenen Nachteilen. Dazu kommt, dass dieses Verfahren softwaretechnisch relativ aufwendig ist, weil zur Ermittlung der für das Auffüllen bzw. für das Ablassen erforderlichen Zeit stets die tatsächliche Volumenmenge berechnet werden muss.

Es besteht daher die Aufgabe, das gattungsgemäße Verfahren zur Luftmengenregelung in einer geschlossenen Luftversorgungsanlage zu vereinfachen.

Diese Aufgabe wird durch die kennzeichnenden Merkmale des Anspruchs 1 gelöst. Zweckdienliche Ausgestaltungen ergeben sich aus den Unteransprüchen 2 bis 6.

Das neue Verfahren beseitigt die genannten Nachteile des Standes der Technik.

Dabei liegt der besondere Vorteil des neuen Verfahrens darin, dass zur Ermittlung der fehlenden oder der überschüssigen Druckluftmenge keine aufwendige Druckmessung mehr notwendig ist, sondern lediglich der Weg und/oder die dafür benötigte Zeit während eines Auf- und/oder Abregelvorhangs gemessen werden müssen. Eine solche Weg- oder Zeitmessung ist mit relativ einfachen und in der Regel zur technischen Anlagenausstattung gehörenden Mitteln möglich. Das vereinfacht die gerätetechnische Ausstattung der Luftversorgungsanlage und verringert die dafür notwendigen Kosten. Dieser gerätetechnische Aufwand kann noch weiter verringert werden, wenn für die Bewegung der Luftfeder zum Beispiel der Weg vorgegeben wird. Dann muss nur noch die Zeit gemessen werden.

Das neue Verfahren zur Luftmengenregelung lässt sich natürlich auch bei anderen Luftversorgungsanlagen anwenden.

Das neue Verfahren soll an Hand mehrerer Ausführungsbeispiele näher erläutert werden.

Dazu zeigen die
- Fig. 1:: einen Schaltplan einer geschlossenen Luftversorgungsanlage,
- Fig. 2:: eine graphische Darstellung über das Weg-/Zeitverhalten der Luftfeder beim Einfedern der Luftfeder,
- Fig. 3:: eine graphische Darstellung nach der Fig. 2 beim Ausfedern der Luftfeder und
- Fig. 4:: eine graphische Darstellung von Aufregelgeschwindigkeiten in Abhängigkeit vom Druck im Luftspeicher und vom Belastungsfall.

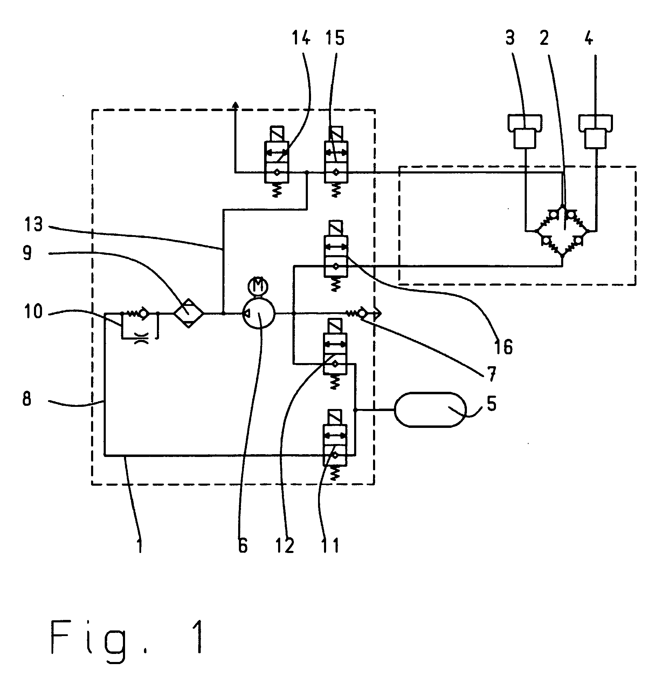

Wie die Fig. 1 zeigt, besteht die Luftversorgungsanlage im Wesentlichen aus einer Antriebseinheit 1, aus einer Rückschlagventilkombination 2, aus mindestens zwei Luftfedern 3, 4 sowie aus einem Luftspeicher 5.

Kernstück der Antriebseinheit 1 ist ein Kompressor 6, der von einem Elektromotor angetrieben wird und der einerseits über ein Saugventil 7 mit der Atmosphäre verbunden ist. Druckseitig hat der Kompressor 6 über eine Speicherdruckleitung 8 Verbindung zum Luftspeicher 5. In dieser Speicherdruckleitung 8 befinden sich ein Lufltrockner 9, ein in Richtung zum Luftspeicher 5 öffnendes Drosselrückschlagventil 10 und ein erstes druckseitiges 2/2-Wegeventil 11. Der Kompressor 6 ist obendrein saugseitig über ein erstes saugseitige 2/2-Wegeventil 12 mit dem Luftspeicher 5 verbunden. Druckseitig steht der Kompressor 6 weiterhin über eine Verbraucherdruckleitung 13 einerseits über ein Ablassventil 14 mit der Atmosphäre und andererseits über ein zweites druckseitiges 2/2-Wegeventil 15 und der Rückschlagventilkombination 2 mit den Luftfedern 3, 4 in Verbindung. Der Kompressor 6 ist auch saugseitig über ein zweites saugseitiges 2/2-Wegeventil 16 und der Rückschlagventilkombination 2 mit den Luftfedern 3, 4 verbunden. Die Rückschlagventilkombination 2 ist so aufgebaut, dass sie in Abhängigkeit von der Bewegungsrichtung der Luftfedern 3, 4 eine Verbindung zur Druckseite oder zur Saugseite des Kompressors 6 verstellt.

Zur Befüllung des Luftspeichers 5 mit frischer Luft aus der Atmosphäre sind die beiden saugseitigen 2/2-Wegeventile 12, 16 und das druckseitige 2/2-Wegeventil 15 sowie das Ablassventil 14 gesperrt und das erste druckseitige 2/2-Wegeventil 11 geöffnet. Der Kompressor 6 saugt die frische Luft über das Saugventil 7 aus der Atmosphäre an und fördert sie über den Lufttrockner 9, dem sich öffnenden Drosselrückschlagventil 10 und dem geöffneten ersten druckseitigen 2/2-Wegeventil 11 in den Luftspeicher 5.

Zur Befüllung der Luftfedern 3, 4 mit komprimierter Druckluft aus dem Luftspeicher 5 werden das erste druckseitige 2/2-Wegeventil 11, das zweite saugseitige 2/2-Wegeventil 16 und das Ablassventil 14 geschlossen. Dagegen wird das erste saugseitige 2/2-Wegeventil 12 und das zweite druckseitige 2/2-Wegeventil 15 des Kompressors 6 geöffnet, sodass der Kompressors 6 die Luft aus dem Luftspeicher 5 ansaugt und sie über die Verbraucherdruckleitung 13 und der Rückschlagventilkombination 2 zu den Luftfedern 3, 4 befördert.

Zur Umfüllung nicht benötigter und trockener Druckluft aus den Luftfedern 3, 4 in den Luftspeicher 5 werden das erste saugseitige 2/2-Wegeventil 12, das zweite druckseitige 2/2-Wegeventil 15 sowie das Ablassventil 14 geschlossen und das zweite saugseitige 2/2-Wegeventil 16 und das erste druckseitige 2/2-Wegeventil 11 geöffnet. Dadurch gelangt die Luft aus den Luftfedern 3, 4 über die Rückschlagkombination 2, dem Kompressor 6 und dem ersten druckseitigen 2/2-Wegeventil 11 in den Luftspeicher 5.

Zur Regenerierung des Trockner 10 mit nicht benötigter und trockener Druckluft aus dem Luftdruckspeicher 5 werden die beiden saugseitigen 2/2-Wegeventile 12, 16 sowie das zweite druckseitige 2/2-Wegeventile 15 geschlossen und das erste druckseitige 2/2-Wegeventil 11 und das Ablassventil 14 geöffnet. Dadurch wird entgegen der Befüllungsrichtung Luft aus dem Luftspeicher 5 über die Speicherdruckleitung 8, dem ge drosselten Drosselrückschlagventil 10, dem Lufttrockner 9, der Verbraucherdruckleitung 16 und dem Ablassventil 14 in die Atmosphäre geleitet.

Zur Absicherung all dieser Funktionen ist es erforderlich, dass in der Luftversorgungsanlage innerhalb eines Luftmengentoleranzbandes eine ausreichende Druckluftmenge für einen Auslegungsfall der Fahrzeugbelastung vorhanden ist.

Bei einer Unterschreitung der ausgelegten Druckluftmenge außerhalb des Luftmengentoleranzbandes muss die Luftversorgungsanlage mit einer erforderlichen Druckluftmenge aufgefüllt werden. Dagegen wird bei einer Überschreitung der ausgelegten Druckluftmenge außerhalb des Luftmengentoleranzbandes eine bestimmte Druckluftmenge aus der Luftversorgungsanlage abgelassen. In beiden Fällen wird erreicht, dass sich der beladene Fahrzeugaufbau mit einer tolerierten Geschwindigkeit anhebt oder absenkt.

Zur Regelung der Luftmenge in der geschlossenen Luftversorgungsanlage wird das neue Verfahren in einem ersten Ausführungsbeispiel vorgestellt.

Dabei wird zunächst die Druckluftmenge der Luflversorgungsanlage so festgelegt, dass bei der Auslegungslast die Drücke im Luftspeicher 5 und in den Luftfedern 3, 4 gleich groß sind, sodass sich bei einer Verbindung von dem Luftspeicher 5 zu den Luftfedern 3, 4 keine Verschiebung der Luftfedern 3, 4 einstellt.

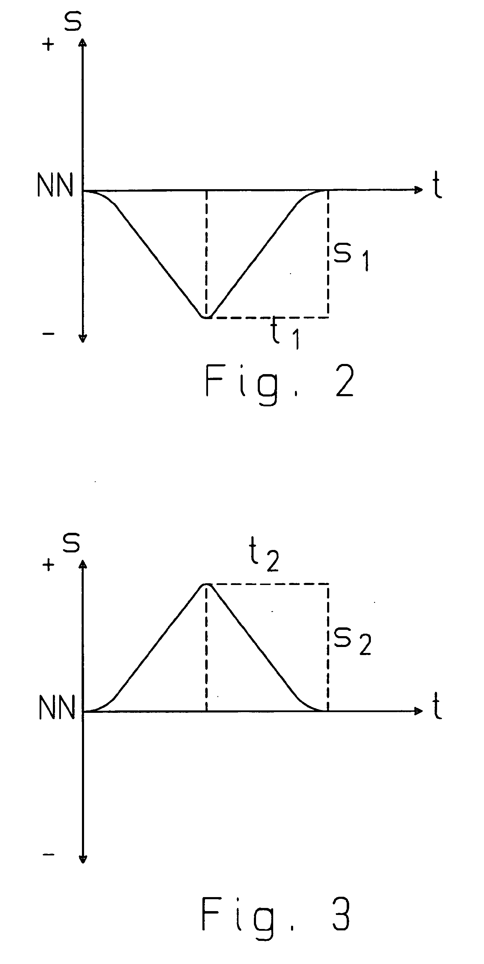

Zur Ermittlung der Abweichung der Druckluftmenge vom Druckluftmengentoleranzband des Auslegungsfalles werden alle saugseitigen und druckseitigen 2/2-Wegeventile 11, 12, 15, 16 geöffnet, während das Ablassventil 14 geschlossen bleibt. Dadurch sind die Luftfedern 3, 4 und der Luftspeicher 5 so miteinander verbunden, dass ein Luftmengenaustausch in beiden Richtungen stattfinden kann. Je nach dem Belastungsfall an den Luftfedern 3, 4 werden die Luftfedern 3, 4 unter das normale Höhenniveau NN einfedern, wie es die Fig. 2 zeigt, oder gemäß der Fig. 3 über das normalen Höhenniveau NN ausfedern, oder unverändert bleiben. Dabei gibt die Richtung der Bewegung der Luftfedern 3, 4 zunächst Aufschluss darüber, ob der aktuelle Belastungsfall größer oder kleiner als der Auslegungsfall ist und/oder die aktuelle Druckluftmenge kleiner oder größer als die optimale Druckluftmenge für den Auslegungsfall ist.

Eingefederte Luftfedern 3, 4 werden gemäß der Fig. 2 unmittelbar im Anschluss mit Hilfe des Kompressors 6 wieder auf das normale Höhenniveau NN aufgeregelt, wobei der zurückgelegte Weg s₁ und die dazu benötigte Zeit t₁ gemessen werden. Daraus wird eine mittlere Aufregelgeschwindigkeit errechnet und mit einer im Steuerungsteil der Luftversorgungsanlage abgelegten Soll-Aufregelgeschwindigkeit verglichen. Ist die mittlere Aufregelgeschwindigkeit kleiner als die Aufregelgeschwindigkeit für die minimale Druckluftmenge des Luftmengenbandes, dann ist die Druckluftmenge in der Luftversorgungsanlage zu klein. Durch eine entsprechende Schaltung der 2/2-Wegeventile 11, 12, 14, 15 und 16 erfolgt über eine definierte Zeit eine Speicherfüllung mit frischer Druckluft.

Ausgefederte Luftfedern 3, 4 werden gemäß der Fig. 3 unmittelbar im Anschluss wieder auf das normale Höhenniveau NN abgeregelt, wobei der zurückgelegte Weg S₂ und die dazu benötigte Zeit t₂ gemessen werden. Daraus wird eine mittlere Abregelgeschwindigkeit errechnet und mit einer im Steuerungsteil der Luftversorgungsanlage abgelegten Soll-Abregelgeschwindigkeit verglichen. Ist die mittlere Abregelgeschwindigkeit größer als die Abregelgeschwindigkeit für die maximale Druckluftmenge des Luftmengenbandes, dann ist die Druckluftmenge in der Luftversorgungsanlage zu groß und es muss eine bestimmte Druckluftmenge aus dem Luftspeicher 5 abgelassen werden. Durch eine entsprechende Schaltung der 2/2-Wegeventile 11 und 14 wird über eine definierte Zeit überschüssige Druckluft über den Trockner 9 aus dem Luftspeicher 5 abgelassen. Damit enthält die Luftversorgungsanlage wieder eine innerhalb des Druckluftmengenbandes Für den Auslegungsfall liegende Druckluftmenge.

Bleiben die Niveaulagen der Luftfeder 3, 4 unverändert, dann entspricht die Beladung und die Druckluftmenge dem Auslegungsfall.

Die Regelung der Luftmenge in der geschlossenen Luftversorgungsanlage nach dem neuen Verfahren ist auch mit einem zweiten Ausführungsbeispiel möglich.

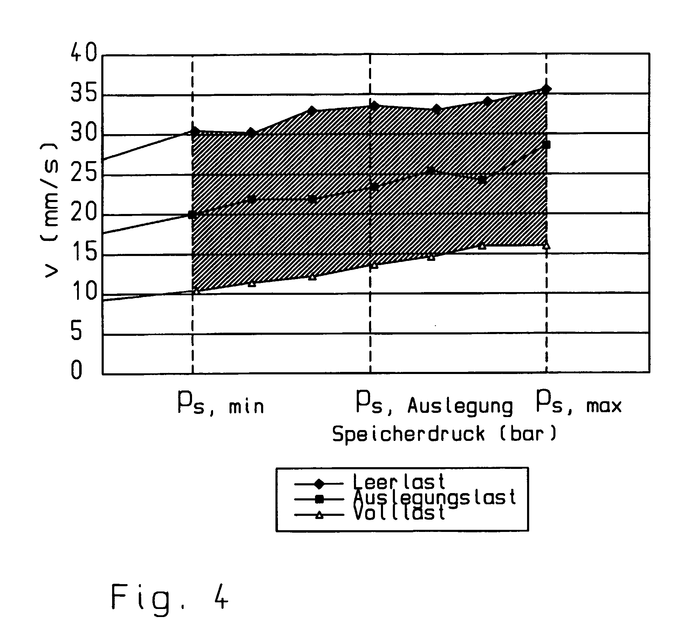

Dazu werden zunächst auf empirischer Weise die Aufregelgeschwindigkeiten einer Leerlast, einer Volllast und einer Auslegungslast aus dem normalen Höhenniveau NN über einen vorbestimmten Weg bei unterschiedlichen Drücken im Luftspeicher 5 er mittelt und in einem Diagramm veranschaulicht. Ein solches Diagramm ist in der Fig. 4 dargestellt. Eine definierte zulässige Luftmengenabweichung legt einen zulässigen minimalen Luftspeicherdruck p_{s min} und einen maximalen Luftspeicherdruck p_{s max} fest. Diese Grenzdrücke werden in das Diagramm übernommen.

Zur Regelung der Druckluftmenge der im Betrieb befindlichen Luftversorgungsanlage wird in einem aktuellen Belastungsfall eine definierte Aufregelung über einen vorbestimmten Weg vorgenommen. Dabei wird die dafür benötigte Zeit gemessen und aus dem definierten Weg und der beanspruchten Zeit die mittlere aktuelle Aufregelgeschwindigkeit errechnet. Diese Aufregelgeschwindigkeit wird mit Hilfe des Diagramms gemäß der Fig. 4 mit allen drei Belastungskennlinien für die Leerlast, die Auslegungslast und die Volllast verglichen.

Liegt die errechnete Aufregelgeschwindigkeit innerhalb der Belastungskennlinien für die Volllast und die Leerlast, dann ist eine ausreichende Druckluftmenge in der Luftversorgungsanlage vorhanden.

Liegt dagegen die errechnete Aufregelgeschwindigkeit unterhalb der Volllastkennlinie beim Speicherdruckes p _{s,min,} dann befindet sich eine zu geringe Druckluftmenge in der Luftversorgungsanlage. Für eine definierte Zeit werden der Kompressor und die entsprechenden 2/2-Wegeventile aktiviert, um Luft aus der Umgebung in den Luftspeicher 5 zu füllen.

Umgekehrt verhält es sich, wenn sich die errechnete Aufregelgeschwindigkeit oberhalb der Leerlast-Kennlinie beim Speicherdruck Ps,maxbefindet, dann ist eine zu hohe Druckluftmenge in der Luftversorgungsanlage vorhanden. Für eine definierte Zeit werden die entsprechenden 2/2-Wegeventile aktiviert, um Luft aus dem Luftspeicher 5 in die Umgebung abzulassen.

Damit enthält die Luftversorgungsanlage wieder eine innerhalb des Druckluftnengenbandes für den Auslegungsfall liegende Druckluftmenge.

Die Regelung der Luftmenge in der geschlossenen Luftversorgungsanlage nach dem neuen Verfahren kann auch mit einem dritten Ausführungsbeispiel vorgenommen wer den. Dieses Ausführungsbeispiel wird angewendet, wenn der Druck im Luftspeicher 5 kleiner als der Druck in den Luftfedern 3, 4 ist.

Zunächst wird innerhalb der Luftversorgungsanlage ein abgeschlossener Kontrollraum ausgewählt, wozu sich am besten das Kurbelgehäuse des Kompressors 6 und der Lufttrockner 9 eignet. Dieser Kontrollraum wird auf ein definiertes Druckniveau gebracht. So ist es zwecksmäßig, diesen Kontrollraum mit Hilfe des 2/2-Wegeventils 14 mit der Atmosphäre zu verbinden, sodass sich im Kontrollraum der atmosphärische Druck einstellt. Anschließend wird das 2/2-Wegeventil 16 für eine definierte Zeit geöffnet, sodass bis zum Druckausgleich eine Druckluftmenge von den druckhöheren Luftfedern 3, 4 in den druckminderen Kontrollraum strömt. Danach wird die Luftversorgungsanlage wieder aufgeregelt, bis sich die Fahrzeugachse wieder in der NN-Ausgangsstellung befindet. Dabei wird der zurückgelegte Weg der Luftfedern 3, 4 und die dafür benötigte Zeit gemessen. Aus diesem Weg und der gemessenen Zeit wird eine mittlere Aufregelgeschwindigkeit errechnet. Aus einer Simulation oder aus einer Messung ergibt sich je nach dem Beladungszustand ein charakteristischer Geschwindigkeitsbereich Vₘᵢₙ ≤v ≤ Vₘₐₓ.

Die errechnete Aufregelgeschwindigkeit wird nun mit den zulässigen Aufregelgeschwindigkeiten verglichen. Wird festgestellt, dass die errechnete Aufregelgeschwindigkeit innerhalb der zulässigen Aufregelgeschwindigkeiten Vₘᵢₙ ≤v ≤Vₘₐₓ liegt, dann ist eine ausreichende Druckluftmenge vorhanden.

Liegt die errechnete Aufregelgeschwindigkeit unterhalb der zulässigen Aufregelgeschwindigkeit Vₘᵢₙ , dann ist eine zu geringe Druckluftmenge in der Luftversorgungsanlage. Für eine definierte Zeit werden der Kompressor 6 und die entsprechenden 2/2-Wegeventile aktiviert und Luft aus der Umgebung in den Luftspeicher 5 gefüllt. Umgekehrt verhält es sich, wenn sich die errechnete Aufregelgeschwindigkeit oberhalb der zulässigen Aufregelgeschwindigkeit Vₘₐₓ befindet, dann ist eine zu hohe Druckluftmenge in der Luftversorgungsanlage vorhanden. Für eine definierte Zeit werden wieder die entsprechenden 2/2-Wegeventile aktiviert, um Luft aus dem Luftspeicher 5 in die Umgebung abzugeben.

Damit enthält die Luftversorgungsanlage wieder eine innerhalb des Druckluftmengenbandes für den Auslegungsfall liegende Druckluftmenge.

### Bezugszeichen:

- 1: Antriebseinheit
- 2: Rückschlagventillcombination
- 3: Luftfeder
- 4: Luftfeder
- 5: Luftspeicher
- 6: Kompressor
- 7: Saugventil
- 8: Speicherdruckleitung
- 9: Lufttrockner
- 10: Drosselrückschlagventil
- 11: erstes druckseitige 2/2-Wegeventil
- 12: erstes saugseitige 2/2-Wegeventil
- 13: Verbraucherdruckleitung
- 14: Ablassventil
- 15: zweites druckseitige 2/2-Wegeventil
- 16: zweites saugseitige 2/2-Wegeventil

## Patentansprüche

1. Verfahren zur Luftmengenregelung in einer geschlossenen Luftversorgungsanlage für ein Fahrwerk, bei dem der Bedarf oder der Überschuss an einer erforderlichen Druckluftmenge der Luftversorgungsanlage für einen Auslegungsfall ermittelt und über eine definierte Zeit der Luftversorgungsanlage aufgefüllt oder abgelassen wird,
**dadurch gekennzeichnet, dass** aus einer definierten Bewegung der Luftfedern (3, 4) eine mittlere Regelgeschwindigkeit errechnet und mit einer optimalen Regelgeschwindigkeit verglichen wird, wobei aus dem Vergleich der Regelgeschwindigkeiten der Bedarf oder der Überschuss an einer Druckluftmenge festgestellt wird.

2. Verfahren nach Anspruch 1,
**dadurch gekennzeichnet, dass** zur Errechnung der mittleren Regelgeschwindigkeit ein Druckausgleich zwischen den Luftfedern (3, 4) und dem Luftspeicher (5) hergestellt wird und die dabei ein- oder ausgefahrenen Luftfedern (3, 4) anschließend auf ein definiertes Höhenniveau auf oder abgeregelt werden, wobei der während des Auf oder Abregelvorganges zurückgelegte Weg und die dafür benötigte Zeit gemessen werden.

3. Verfahren nach Anspruch 1,
**dadurch gekennzeichnet, dass** zur Errechnung der mittleren Regelgeschwindigkeit die Luftfeder (3, 4) auf ein definiertes Höhenniveau aufgeregelt werden, wobei der während des Aufregelvorganges benötigte Weg und die dafür benötigte Zeit gemessen werden, und die optimale Regelgeschwindigkeit aus einem Regelgeschwindigkeitsbereich besteht, der aus einer Volllastkennlinie, einer Auslegungskennlinie und einer Leerlastkennlinie gebildet wird, wobei alle Kennlinien durch einen minimalen Speicherdruck pₛₘᵢₙ und einem maximalen Speicherdruck pₛₘₐₓ begrenzt sind und der minimale Speicherdruck pₛₘᵢₙ in der Vollastkennlinie und der maxiamale Speicherdruck Pₛₘₐₓ in der Leerlastkennlinie sich als Vergleichskriterien darstellen.

4. Verfahren nach Anspruch 1,
**dadurch gekennzeichnet, dass** zur Errechnung der mittleren Regelgeschwindigkeit ein Druckausgleich zwischen den Luftfedern (3, 4) und einem abgeschlossenen Kontrollraum mit einem definierten Druck hergestellt wird und die dabei eingefahrenen Luftfedern (3, 4) anschließend auf ein definiertes Höhenniveau aufgeregelt werden, wobei der während des Aufregelvorganges zurückgelegte Weg und die dafür benötigte Zeit gemessen werden, und die optimale Regelgeschwindigkeit sich aus einem beladungsabhängig simulierten oder gemessenem Geschwindigkeitsbereich vₘᵢₙ ≤v ≤ vₘₐₓ ergibt, wobei sich die minimale Aufregelgeschwindigkeit vₘᵢₙ und die maximale Aufregelgeschwindigkeit vₘₐₓ als Vergleichskriterien darstellen.

5. Verfahren nach Anspruch 4,
**dadurch gekennzeichnet, dass** als abgeschlossener Kontrollraum das Kurbelgehäuse des Kompressors (6) und der Lufttrockner (9) gewählt wird und der Druck im Kontrollraum der Atmosphäre angeglichen wird.

6. Verfahren nach einem der Ansprüche 2 bis 4,
**dadurch gekennzeichnet, dass** zur Auf- oder Abregelung der Luftfedern (3, 4) auf ein definiertes Höhenniveau der Weg der Luftfedern (3, 4) vorgeben und nur die dafür benötigte Zeit gemessen wird oder die Zeit vorgeben und nur der zurückgelegte Weg der Luftfedern (3, 4) gemessen wird.

## Claims

1. Method for regulating the quantity of air in a self-contained air supply system for a chassis, in which the demand for or the excess of a necessary quantity of compressed air for the air supply system is determined for a prescribed design case and is fed into the air supply system or let out of it over a defined time, **characterized in that** an average regulating speed is calculated from a defined movement of the air springs (3, 4) and is compared with an optimum regulating speed, the demand for or the excess of a quantity of compressed air being determined from the comparison between the regulating speeds.

2. Method according to Claim 1, **characterized in that** in order to calculate the average regulating speed a pressure equalization is brought about between the air springs (3, 4) and the air cell (5) and the air springs (3, 4) which are retracted or extended in the process are subsequently raised or lowered to a defined height level, the travel carried out during the raising or lowering process and the time required for it being measured.

3. Method according to Claim 1, **characterized in that** in order to calculate the average regulating speed the air springs (3, 4) are raised to a defined height level, with the travel required during the raising process and the time required for it being measured and the optimum regulating speed being composed of a regulating speed range which is formed from a full load characteristic curve, a specific design characteristic curve and an idling load characteristic curve, all the characteristic curves being bounded by a minimum accumulator pressure pₛₘᵢₙ and a maximum accumulator pressure pₛₘₐₓ and the minimum accumulator pressure pₛₘᵢₙ in the full load characteristic curve and the maximum accumulator pressure pₛₘₐₓ in the idling load characteristic curve forming comparison criteria.

4. Method according to Claim 1, **characterized in that** in order to calculate the average regulating speed a pressure equalization is brought about between the air springs (3, 4) and an enclosed control space with a defined pressure and the air springs (3, 4) which are retracted here are subsequently raised to a defined height level, the travel carried out during the raising process and the time required for it being measured and the optimum regulating speed being obtained from a speed range Vₘᵢₙ ≤ v ≤ Vₘₐₓ which is simulated or measured as a function of load, the minimum raising speed Vₘᵢₙ and the maximum raising speed Vₘₐₓ forming comparison criteria.

5. Method according to Claim 4, **characterized in that** the crank housing of the compressor (6) and the air drier (9) is selected as an enclosed control space and the pressure in the control space is approximated to the atmosphere.

6. Method according to one of Claims 2 to 4,
**characterized in that** the travel of the air springs (3, 4) is predefined in order to raise or lower the air springs (3, 4) to a defined height level, and only the time required for this is measured or the time is predefined and only the travel carried out by the air springs (3, 4) is measured.

## Revendications

1. Procédé de réglage du débit d'air dans une installation fermée d'alimentation en air d'un train de roulement, dans lequel le déficit ou l'excédent en débit d'air comprimé nécessaire pour l'installation d'alimentation en air est déterminé pour un cas nominal et est apporté dans l'installation d'alimentation en air ou évacué de cette dernière en une durée définie,
**caractérisé en ce que**
une vitesse moyenne de réglage est calculée à partir d'un déplacement défini des amortisseurs pneumatiques (3, 4) et est comparée à une vitesse optimale de réglage, le déficit ou l'excédent en débit d'air comprimé étant définis à partir de la comparaison entre les vitesses de réglage.

2. Procédé selon la revendication 1, **caractérisé en ce que** pour calculer la vitesse moyenne de réglage, la pression est équilibrée entre les amortisseurs pneumatiques (3, 4) et la réserve d'air (5), les amortisseurs pneumatiques (3, 4) ainsi rétractés ou déployés sont ensuite réglés à un niveau de hauteur défini et le chemin parcouru pendant l'opération de réglage ainsi que le temps nécessaire pour cette dernière sont mesurés.

3. Procédé selon la revendication 1, **caractérisé en ce que** pour calculer la vitesse moyenne de réglage, les amortisseurs pneumatiques (3, 4) sont réglés à un niveau de hauteur défini, le chemin parcouru pendant l'opération de réglage et le temps nécessaire à cette dernière sont mesurés, la vitesse optimale de réglage étant située dans une plage de vitesse de réglage qui est formée par une ligne caractéristique de pleine charge, une ligne caractéristique nominale et une ligne caractéristique à vide, toutes les lignes caractéristiques étant délimitées par une pression minimale de réserve pₛₘᵢₙet une pression maximale de réserve pₛₘₐₓ, la pression minimale de réserve Pₛₘᵢₙ et la pression maximale de réserve pₛₘₐₓ de la ligne caractéristique à vide représentant des critères de comparaison respectifs.

4. Procédé selon la revendication 1, **caractérisé en ce que** pour calculer une vitesse moyenne de réglage, la pression est équilibrée entre les amortisseurs pneumatiques (3, 4) et un espace de contrôle fermé présentant une pression définie, les amortisseurs pneumatiques (3, 4) qui se sont rétractés à cette occasion sont ensuite réglés à un niveau de hauteur défini et le chemin parcouru pendant l'opération de réglage ainsi que le temps nécessaire pour cette opération sont mesurés, la vitesse optimale de réglage résultant d'une plage de vitesse simulée en fonction de la charge ou mesurée Vₘᵢₙ ≤ v ≤ Vₘₐₓ, la vitesse minimale de réglage Vₘᵢₙ et la vitesse maximale de réglage Vₘₐₓ représentant des critères de comparaison.

5. Procédé selon la revendication 4, **caractérisé en ce que** comme espace de contrôle fermé, on sélectionne le carter de vilebrequin du compresseur (6) et le séchoir d'air (9), la pression régnant dans l'espace de contrôle étant rendue égale à celle de l'atmosphère.

6. Procédé selon l'une des revendications 2 à 4,
**caractérisé en ce que** pour le réglage des amortisseurs (3, 4) à un niveau de hauteur défini, le chemin parcouru par les amortisseurs pneumatiques (3, 4) est prédéterminé et seule la durée nécessaire pour cette opération est mesurée ou la durée est prédéterminée et seul le chemin parcouru par les amortisseurs pneumatiques (3, 4) est mesuré.
